# EUROPÄISCHE PATENTSCHRIFT

(11) **EP 0 460 351 B1**
(45) Veröffentlichungstag und Bekanntmachung des Hinweises auf die Patenterteilung: **02.02.1994**
(21) Anmeldenummer: 91101583.2
(22) Anmeldetag: 06.02.1991
(51) Int. Cl.: B23Q 16/00, B23Q 3/00

(54) **Vorrichtung zum gegenseitigen Längsverschieben zweier aufeinanderliegender Platten**
Device for the mutual longitudinal displacement of two plates, one lying on top of the other
Dispositif pour déplacer en longueur et en sens contraire deux plaques posées l'une sur l'autre

(30) Priorität: 14.04.1990 DE 4012131
(43) Veröffentlichungstag der Anmeldung: 11.12.1991
(73) Patentinhaber: HEINRICH GöTZ & SOHN GMBH, D-74858 Aglasterhausen (DE)
(72) Erfinder: Volker, Kurt Keller, W-6952 Obrigheim-Mörtelstein (DE)
(74) Vertreter: Clemens, Gerhard, Dr.-Ing.

(56) Entgegenhaltungen:
- EP-A- 0 283 548
- EP-A- 0 316 833
- DE-A- 3 503 752
- DE-A- 3 739 006
- DE-C- 821 143
- DE-U1-89 08 551

## Beschreibung

Die Erfindung betrifft eine Werkstückhaltevorrichtung mit zwei flachen aufeinanderliegenden Werkstückhalteplatten, die zur Anpassung an unterschiedliche Werkstückgrößen gegeneinander längsverschiebbar sind mit Hilfe eines Zahnrades, das drehsteif auf einer durch fluchtende Langlöcher der Platten gesteckten Welle steckt und mit einander diametral gegenüberliegenden Umfangsabschnitten mit je einer Verzahnung der jeweils eine Längsseite der beiden Langlöcher kämmt, und mit einer lösbaren Arretierung für die Welle.

Eine solche Vorrichtung ist aus der DE-U-8908551 bekannt und wird benötigt zur Verschiebung und Arretierung von Werkstückhalteplatten einer mit Werkstückaufnahmen für Werkstücke ausgestatteten Palette. Durch Verschieben der Platten gegeneinander können die Werkstückaufnahmen unterschiedlichen Größen der zu palettierenden Werkstücke angepaßt werden. Solche Paletten werden von Robotern bedient und deshalb ist es Aufgabe der Erfindung, eine Vorrichtung der eingangs genannten Art so auszugestalten, daß sie bequem von Roboterwerkzeugen betätigbar ist.

Die Erfindung löst diese Aufgabe bei einer Werkstückhaltevorrichtung der eingangs genannten Art dadurch, daß auf der einen Seite der Platten an der Welle drehsteif und längsfest eine Kupplungsscheibe befestigt ist, daß ein Kupplungsgegenstück auf der gegenüberliegenden Seite der Platten drehsteif, aber längsverschieblich auf die Welle gesteckt ist, daß eine Feder vorgesehen ist, die auf der Welle einerseits und auf dem Kupplungsgegenstück andererseits abgestützt ist und das Bestreben hat, die beiden Platten sowie das Zahnrad zwischen der Kupplungsscheibe und dem Kupplungsgegenstück zu verklemmen.

Bei dieser Vorrichtung erfolgt die Arretierung durch Verklemmen und diese Verklemmung kann leicht gelöst werden, indem das Kupplungsgegenstück gegen die Kraftwirkung der Feder von den Platten abgehoben wird. Das ist möglich durch Zugriff an einer einzigen Stelle, nämlich an der Stelle der Vorrichtung, und auch nur von einer Seite, nämlich von der Seite, an der das Kupplungsgegenstück angeordnet ist. An der gleichen Stelle und mit dem gleichen Zugriff kann dann auch durch Verdrehen des Kupplungsgegenstückes bei gelöster Verklemmung die Längsverschiebung betätigt werden. Das entspricht der angestrebten robotergerechten Ausgestaltung.

Die Vorrichtung ist vorzugsweise derart ausgestaltet, daß Platten jeweils den einen Teil der Umrandung eines Werkstückaufnahmeloches bilden, dessen anderer demgegenüber zur Veränderung der Größe des Werkstückaufnahmeloches verschieblicher Teil durch die jeweils andere Platte gebildet wird.

Vorzugsweise ist eine Führungsplatte vorgesehen, die flach zwischen der Kupplungsscheibe einerseits und den Platten andererseits angeordnet ist und ein mit den Langlöchern fluchtendes Lagerloch für die Welle aufweist, durch das die Führungsplatte gegenüber der Welle senkrecht zur Wellenachse, also in Verstellrichtung der Führungsplatte, unverschieblich ist.

Durch diese Fuhrungsplatte ist einerseits die Vorrichtung räumlich fixiert und die Kupplungsscheibe findet eine Anlagefläche, die nicht von den Langlöchern durchsetzt ist.

Gemäß einer Weiterbildung der Erfindung empfiehlt es sich, daß eine zur ersten Führungsplatte planparallel mit Abstand zu dieser auf der gleichen Seite der Platten angeordnete zweite Führungsplatte vorgesehen ist, die ein Lager für die Welle aufweist und mit der ersten Führungsplatte verbunden ist. Durch diese zweite Führungsplatte wird die Lagerung der Welle auf einfache Weise stabilisiert.

Die Kupplungsscheibe soll im Interesse einer sicheren Arretierung eine möglichst große Bremskraft auswirken gegen unbeabsichtigtes Verdrehen der Welle. Das wird dadurch möglich, daß die Kupplungsscheibe koaxial zur Welle auf ihrer den Platten zugekehrten Seite einen Bremsring aufweist, dessen Außenradius mindestens so groß ist wie der des Zahnrades.

Die vorgesehene Kupplungsscheibe kann auch mit entsprechend größerem Radius ausgestattet werden und dadurch einem größeren Bremsring Platz bieten, wodurch die Bremswirkung bei sonst gleichen Verhältnissen weiter verstärkt wird.

Eine bevorzugte, weil einfach auszuführende Ausgestaltung der erfinderischen Vorrichtung ist dadurch gekennzeichnet, daß auf der den Platten abgekehrten Seite des Kupplungsgegenstücks ein Sicherungselement an der Welle befestigt ist und, daß die Feder eine Druckfeder ist, die zwischen dem Sicherungselement und dem Kupplungsgegenstück verspannt auf die Welle gesteckt ist. Zweckmäßig ist das Sicherungselement ein vorzugsweise lösbarer Sicherungs- bolzen, der quer durch die Welle gesteckt ist. Dann kann man die Vorrichtung leicht auseinandernehmen, indem man den Sicherungsbolzen herauszieht.

Aus räumlichen Gründen empfiehlt es sich, für die Druckfeder in dem Kupplungsgegenstück eine Versenkung auszusparen.

Um den Zugriff des Roboterwerkzeuges zu erleichtern, empfiehlt es sich, außen am Kupplungsgegenstück koaxial zur Wellenachse eine ringförmige Einschnürung für den Zugriff eines Roboterwerkzeuges zum Hinterfassen des Kupplungsgegenstückes vorzusehen. Mit diesem Roboterwerkzeug wird dann zum Arretieren und Verstellen das Kupplungsgegenstück durch Eingriff in die Einschnürung hinterfaßt, gegen die Kraftwirkung der Feder angehoben und dann gedreht. Dabei kann man, um Verrutschen beim Verdrehen zu vermeiden, die entsprechende Anlagefläche des Kupplungsgegenstückes und/oder des Roboterwerkzeuges mit Aufrauhungen oder Unebenheiten versehen.

Die Welle ist vorzugsweise auf der Seite des Kupplungsgegenstückes als Wellenstumpf ausgebildet, dessen Stirnseite als Anlagefläche eines Roboterwerkzeuges zum Zusammendrücken der Druckfeder ausgebildet ist. Auf diese Weise kann durch das Roboterwerkzeug die Vorrichtung vom Gegendruck der beim Entarretieren zusammengedrückten Druckfeder entlastet werden. Es genügt ein Roboterwerkzeug, das mit einem Stempel auf die Anlagefläche drückt, gleichzeitig das Kupplungsgegenstück durch Eingriff in die Einschnürung hinterfaßt und gegen den Stempeldruck abhebt und dreht. Die Anlage des Stempels auf der Stirnfläche ist dabei glatt, so daß sie die Drehbewegung der Welle nicht behindet, oder das Roboterwerkzeug ist so ausgestaltet, daß sich der Stempel mit um die Wellenachse dreht, wenn die Welle durch die hinterfassenden Teile des Roboterwerkzeuges gedreht wird.

Die Erfindung wird nun anhand der beigefügten Zeichnung näher erläutert.

In der Zeichnung zeigt:
- Figur 1: eine Vorrichtung zum Längsverschieben und Arretieren zweier flacher, aufeinanderliegender Platten gegeneinander im Schnitt, und zwar in arretierter Stellung mit angesetztem, aber noch nicht wirksamem Roboterwerkzeug,
- Figur 2: die Teile aus Figur bei gelöster Arretierung und mit gegenüber Figur 1 gegeneinander verschobenen Platten,
- Figur 3: den Schnitt III aus Figur 1,
- Figur 4: den Schnitt IV aus Figur 1 und
- Figur 5: ausschnittsweise eine mit Vorrichtungen nach Figur 1 ausgerüstete Palette perspektivisch.

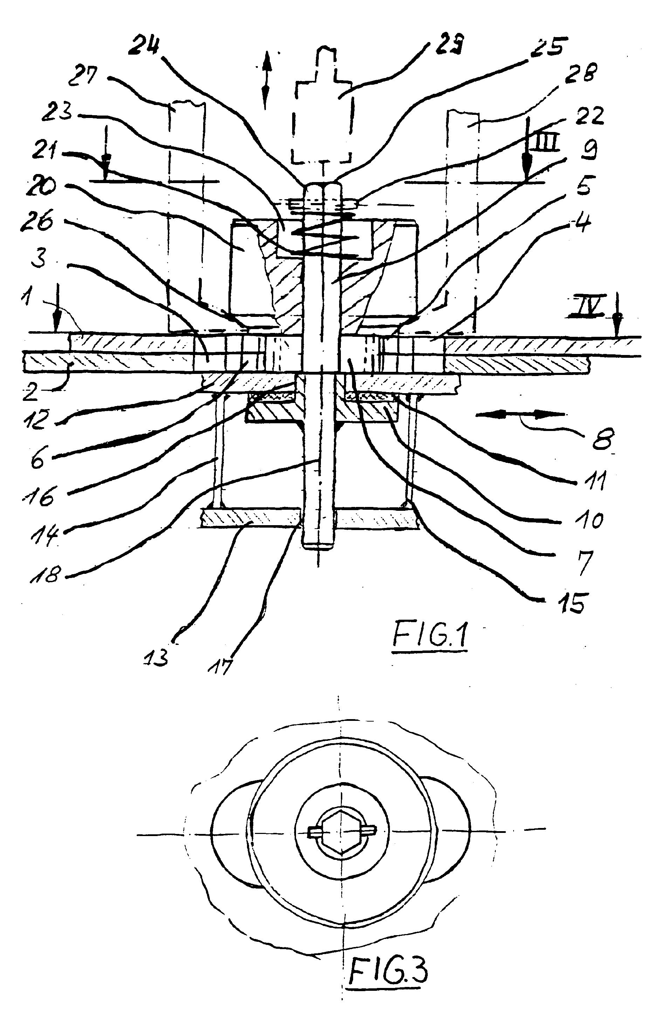

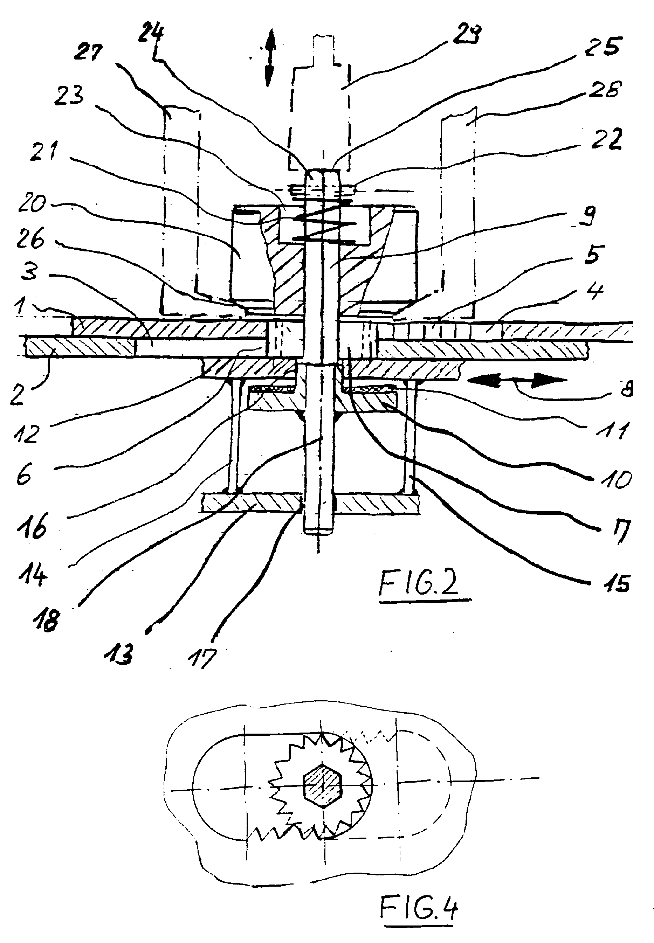

Mit 1 und 2 sind gemäß Figur 1 zwei flache, aufeinanderliegende, aus Stahlblech bestehende Platten bezeichnet, die jeweils ein Langloch 3, 4 aufweisen. Die beiden Langlöcher 3, 4 fluchten miteinander und weisen an je einer Längsseite eine Verzahnung auf. Die Verzahnung 5 des Langlochs 3 ist in Figur 3 sichtbar, die Verzahnung 6 des Langslochs 4 ist in Figur 2 gestrichelt eingezeichnet. Die beiden Verzahnungen kämmen mit einem Zahnrad 7, und zwar mit einander diametral gegenüberliegenden Umfangsabschnitten dieses Zahnrades. Wenn das Zahnrad 7 sich dreht, verschieben sich mithin die beiden Platten 1, 2 in Pfeilrichtung 8 gegeneinander.

Das Zahnrad 7 steckt verdrehungssteif auf einer Welle 9. Auf der Welle 9 steckt außerdem verdrehungssteif und gegen Längsverschiebung gesichert eine Kupplungsscheibe 10, die mit einem Bremsring 11 ausgestattet ist. Der Bremsring 11 liegt in arretiertem Zustand an einer stationären Führungsplatte 12 an, die zwischen dem Bremsring 11 und den Platten 1 und 2 flach an den Platten an liegend angeordnet ist. Der Bremsring hat einen möglichst großen Durchmesser im Interesse einer hohen Bremskraft, zumindest ist dessen Außenradius so groß wie der des Zahnrades 7.

Mit 13 ist eine zur ersten Führungsplatte 12 planparallel angeordnete zweite Führungsplatte bezeichnet, die an der ersten Führungsplatte 12 befestigt ist, unter anderem mit Befestigungsstegen 14, 15. Die Führungsplatte 12 weist für die Platte 1 in der Zeichnung nicht sichtbare Führungen auf. Die Platte 2 weist ebenfalls in der Zeichnung nicht sichtbare Führungen für die Platte 1 auf. Diese Führungen stellen sicher, daß die Platten 1 und 2 gegeneinander und gegenüber der Führungsplatte 12 nur in Pfeilrichtung 8 längsverschieblich sind.

Für die Welle 9 ist in der ersten Führungsplatte 12 ein Lagerdurchbruch 16 und in der zweiten Führungsplatte 13 ein Lagerdurchbruch 17 vorgesehen. Die beiden Lagerdurchbrüche 16 und 17 fixieren die Welle 9 gegen Verschieben quer zur Wellenachse 18.

Auf der der Kupplungsscheibe 10 abgekehrten Seite der Platten 1 und 2 ist ein Kupplungsgegenstück 20 drehsteif aber axial verschieblich auf die Welle 9 gesteckt. Dieses Kupplungsgegenstück wird von einer Druckfeder 21, die sich auf einem durch die Welle 9 lösbar gesteckten Sicherungsbolzen 22 abstützt, gegen die Platten 1 und 2 gepreßt, die auf diese Weise zwischen dem Bremsring 11 und dem Kupplungsgegenstück 20 verklemmt sind. Für die Druckfeder 21 ist aus Platzgründen in dem Kupplungsgegenstück 20 eine Versenkung 23 ausgespart.

Die Welle 9 ist auf der Seite des Kupplungsgegenstückes 20, das ist die in Figur 1 oben gezeichnete Seite, die die Bedienungsseite ist, als Wellenstumpf 24 ausgebildet und an ihrer Stirnseite zu einer Anlagefläche 25 abgeflacht.

Das Kupplungsgegenstück 20 weist auf seinem Umfang eine ringförmige Einschnürung 26 auf für den Zugriff eines Roboterwerkzeuges 27, 28. Bei Betrieb greifen Krallen des Roboterwerkzeuges 27, 28 in die Einschnürung 26, während gleichzeitig ein Stempel 29 des Roboterwerkzeuges gegen die Anlagefläche 25 angesetzt ist. Sobald der Stempel 29 die Welle 9 mit Kupplungsscheibe 10 und Bremsring 11 gegen die Kraftwirkung der Druckfeder 21 verschiebt, die dabei gleichzeitig durch die Krallen des Roboterwerkzeuges abgestützt wird, löst sich die Verklemmung der Platten 1, 2 mit der Führungsplatte 12 und damit die Arretierung der Platten 1 und 2. In so angehobenem Zustand kann sich nun das Roboterwerkzeug drehen. Dadurch dreht sich das Kupplungsgegenstück 20 und die Welle 9 und mit ihr das Zahnrad 7 und die beiden Platten 1 und 2 erfahren eine entsprechende gegeneinander gerichtete Längsverschiebung, und zwar symmetrisch, eine Platte in der einen Richtung, die andere Platte das gleiche Stück in Gegenrichtung.

Ist die neue Einstellung gefunden, dann ist die Drehbewegung beendet, die Krallen senken sich ab in die in Figur 1 gezeichnete Stellung und das Roboterwerkzeug kann funktionslos abgenommen werden.

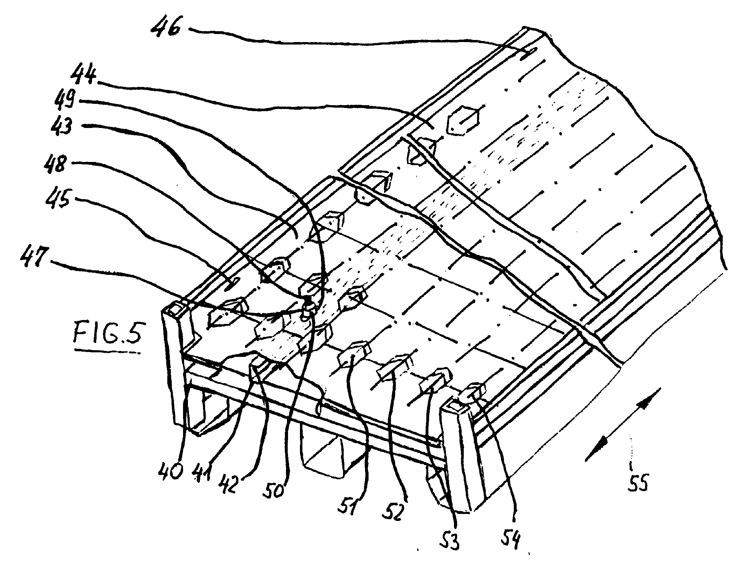

Anhand der Figur 5 wird nun eine Werkstückhaltepalette beschrieben, die mit Vorrichtungen nach Figur 1 bis 4 ausgestattet ist.

In Figur 5 ist mit 40 ein stabiler, rechteckiger Rahmen bezeichnet, an dem eine erste Führungsplatte 41 und eine zweite Führungsplatte 42 planparallel und mit Abstand zueinander befestigt sind. Über der ersten Führungsplatte 41 sind die Platten 43, 44 flach dicht aufliegend in Pfeilrichtung 55 längsverschieblich angeordnet. Zur Halterung der Platten 43, 44 und zur Definition und Begrenzung der Längsverschiebung sind Führungen 45, 46 vorgesehen, die mit den Platten 43, 44 führend zusammenwirken.

Mit 47 ist eine Vorrichtung nach Figur 1 bis 4 bezeichnet, die zum Längsverschieben der Platten 43, 44 in Pfeilrichtung 55 gegeneinander und zur Arretierung dient, wobei der Roboterzugriff, der gemäß Figur 1 von oben kommt, auch nach Figur 5 von oben kommt. Die Vorrichtung 47 ist also gemäß Figur 5 so eingesetzt, daß das, das in Figur 1 oben ist, auch in Figur 5 oben ist. Die Funktion der Befestigungsstege 14, 15 wird durch den Rahmen 40 erfüllt. Weitere Befestigungsstege sind nicht vorgesehen. Die der Welle 9 entsprechende Welle ist mit 48, der dem Lagerdurchbruch 17 entsprechende Lagerdurchbruch ist mit 49 und das dem Kupplungsgegenstück 20 entsprechende Kupplungsgegenstück ist mit 50 bezeichnet.

Die beiden Platten 43, 44 weisen Aufnahmelöcher 51, 52 für Werkstücke auf. Diese Aufnahmelöcher fluchten nur in der einen Extremstellung der beiden Platten 43, 44 miteinander und werden verkleinert, wenn die beiden Platten aus dieser Extremstellung gegeneinander verschoben werden. Die Führungsplatte 41 weist ebenfalls Aufnahmelöcher 53, 54 auf, die mit den Aufnahmelöchern der Platten 43, 44 in deren erste Extremstellung fluchten und mindestens so groß sind wie diese.

## Patentansprüche

1. Werkstückhaltevorrichtung
mit zwei flachen aufeinanderliegenden Werkstückhalteplatten (1, 2), die zur Anpassung an unterschiedliche Werkstückgrößen gegeneinander längsverschiebbar sind mit Hilfe eines Zahnrades (7), das drehsteif auf einer durch fluchtende Langlöcher (3, 4) der Platten (1, 2) gesteckten Welle (9) steckt und mit einander diametral gegenüberliegenden Umfangsabschnitten mit je einer Verzahnung der jeweils eine Längsseite der beiden Langlöcher kämmt,
und mit einer lösbaren Arretierung für die Welle, dadurch gekennzeichnet,
daß auf der einen Seite der Platten (1, 2) an der Welle (9) drehsteif und längsfest eine Kupplungsscheibe (10) befestigt ist,
daß ein Kupplungsgegenstück (20) auf der gegenüberliegenden Seite der Platten drehsteif, aber längsverschieblich auf die Welle gesteckt ist,
daß eine Feder (21) vorgesehen ist, die auf der Welle einerseits und auf dem Kupplungsgegenstück andererseits abgestützt ist und das Bestreben hat, die beiden Platten sowie das Zahnrad zwischen der Kupplungsscheibe und dem Kupplungsgegenstück zu verklemmen.

2. Vorrichtung nach Anspruch 1, dadurch gekennzeichnet,
daß eine Führungsplatte (12) vorgesehen ist, die flach zwischen der Kupplungsscheibe (10) einerseits und den Platten (1, 2) andererseits angeordnet ist und ein mit den Langlöchern (3, 4) fluchtendes Lagerloch (16) für die Welle (9) aufweist, durch das die Führungsplatte gegenüber der Welle senkrecht zur Wellenachse (18), also in Verstellrichtung der Führungsplatte, unverschieblich ist.

3. Vorrichtung nach Anspruch 2, dadurch gekennzeichnet,
daß eine zur ersten Führungsplatte (12) planparallel mit Abstand zu dieser auf der gleichen Seite der Platten (1, 2) angeordnete zweite Führungsplatte (13) vorgesehen ist, die ein Lager (17) für die Welle (9) aufweist und mit der ersten Führungsplatte (12) verbunden ist.

4. Vorrichtung nach einem der vorhergehenden Ansprüche dadurch gekennzeichnet,
daß die Kupplungsscheibe (10) koaxial zur Welle (9) auf ihrer den Platten (1, 2) zugekehrten Seite einen Bremsring (11) aufweist, dessen Außenradius mindestens so groß ist wie der des Zahnrades (7).

5. Vorrichtung nach einem der vorhergehenden Ansprüche, dadurch gekennzeichnet,
daß auf der den Platten (1, 2) abgekehrten Seite des Kupplungsgegenstücks (20) ein Sicherungselement (22) an der Welle (9) befestigt ist und,
daß die Feder (21) eine Druckfeder ist, die zwischen dem Sicherungselement und dem Kupplungsgegenstück verspannt auf die Welle gesteckt ist.

6. Vorrichtung nach Anspruch 5, dadurch gekennzeichnet,
daß für die Druckfeder (21) in dem Kupplungsgegenstück (20) eine Versenkung (23) ausgespart ist.

7. Vorrichtung nach einem der vorhergehenden Ansprüche, dadurch gekennzeichnet,
daß außen am Kupplungsgegenstück (20) koaxial zur Wellenachse (18) eine ringförmige Einschnürung (26) für den Zugriff eines Roboterwerkzeuges (27, 28) zum Hinterfassen des Kupplungsgegenstückes vorgesehen ist.

8. Vorrichtung nach einem der vorhergehenden Ansprüche, insbesondere nach Anspruch 7, dadurch gekennzeichnet,
daß die Welle (9) auf der Seite des Kupplungsgegenstückes (20) als Wellenstumpf (24) ausgebildet ist, dessen Stirnseite als Anlagefläche (25) eines Roboterwerkzeuges (27, 28) zum Zusammendrücken der Druckfeder (21) ausgebildet ist.

9. Vorrichtung nach einem der vorhergehenden Ansprüche, dadurch gekennzeichnet,
daß Platten (43, 44) jeweils den einen Teil der Umrandung eines Werkstückaufnahmeloches (51, 52) bilden, dessen anderer demgegenüber zur Veränderung der Größe des Werkstückaufnahmeloches verschieblicher Teil durch die jeweils andere Platte gebildet wird.

## Claims

1. Workpiece holding device having two flat workpiece holding plates (1, 2) which lie one on top of the other and which, for the purpose of adaptation to different workpiece sizes, can be displaced longitudinally relative to each other with the aid of a gear (7) which is mounted, in a rotationally rigid manner on a shaft (9) inserted through aligned slots (3, 4) in the plates (1, 2) and which meshes by means of diametrical by opposite portions of its periphery with a respective toothing on one longitudinal side of each of the two slots, and having a releasable locking means for the shaft, characterized in that on the one side of the plates (1, 2) a coupling disc (10) is fastened on the shaft (9) in a rotationally rigid and longitudinally fixed manner, in that a coupling counterpart (20) is mounted on the shaft, in a rotationally rigid, but longitudinally displaceable manner on the opposite side of the plates, in that a spring (21) is provided which is supported on the one hand on the shaft and on the other hand on the coupling counterpart and which tends to clamp the two plates and the gear between the coupling disc and the coupling counterpart.

2. Device according to Claim 1, characterized in that a guide plate (12) is provided which is arranged flat between the coupling disc (10) on the one hand and the plates (1, 2) on the other hand and which has for the shaft (9) a mounting hole (16) which is aligned with the slots (3, 4) and by which the guide plate is undisplaceable, relative to the shaft, at right angles to the shaft axis (18), that is to say in the direction of adjustment of the guide plate.

3. Device according to Claim 2, characterized in that a second guide plate (13) is provided, which is plane-parallel to the first guide plate (12) and is arranged at a distance from the latter on the same side of the plates (1, 2) and which has a bearing (17) for the shaft (9) and is joined to the first guide plate (12).

4. Device according to one of the preceding claims, characterized in that the coupling disc (10) is provided, coaxially to the shaft (9), on its side facing the plates (1, 2), with a brake ring (11) whose external radius is at least as great as that of the gear (7).

5. Device according to one of the preceding claims, characterized in that on the side of the coupling counterpart (20) remote from the plates (1, 2) a securing element (22) is fastened on the shaft (9) and in that the spring (21) is a compression spring which is mounted under stress on the shaft between the securing element and the coupling counterpart.

6. Device according to Claim 5, characterized in that a depression (23) is formed in the coupling counterpart (20) for the compression spring (21).

7. Device according to one of the preceding claims, characterized in that on the outside of the coupling counterpart (20) an annular constriction (26) is provided, coaxially to the shaft axis (18), to give access for a robot tool (27, 28) to engage behind the coupling counterpart.

8. Device according to one of the preceding claims, particularly according to Claim 7, characterized in that on the side of the coupling counterpart (20) the shaft (9) is in the form of a shaft butt (24) whose end face is in the form of a bearing surface (25) of a robot tool (27, 28) for compressing the compression spring (21).

9. Device according to one of the preceding claims, characterized in that plates (43, 44) each form the one part of the rim of a workpiece holder hole (51, 52) whose other part, which is movable relative thereto in order to vary the size of the workpiece holder hole, is formed by the respective other plate.

## Revendications

1. Dispositif pour maintenir une pièce à usiner comprenant deux plaques (1, 2) de maintien plates et superposées pour la pièce à usiner, qui, pour s'adapter à des pièces à usiner de différentes tailles, peuvent être déplacées longitudinalement l'une par rapport à l'autre à l'aide d'une roue dentée (7) qui est enfilée de manière rigide en torsion sur un arbre (9) enfoncé dans des trous oblongs (3, 4) alignés des plaques (1, 2) et qui, avec des segments périphériques diamétralement opposés, est en prise avec chaque fois une denture de l'un des côtés longitudinaux des deux trous oblongs, et comportant également un dispositif d'arrêt amovible pour l'arbre, caractérisé en ce que, sur l'une des faces des plaques (1, 2), un disque d'embrayage (10) est fixé de manière rigide en torsion et fixe longitudinalement à l'arbre (9), en ce que sur la face opposée des plaques, un pendant d'embrayage (20) est enfilé sur l'arbre de manière rigide en torsion mais déplaçable longitudinalement, en ce qu'est prévu un ressort (21) qui prend appui, d'une part, sur l'arbre et, d'autre part, sur le pendant d'embrayage, et qui tend à coincer les deux plaques ainsi que la roue dentée entre le disque d'embrayage et le pendant d'embrayage.

2. Dispositif selon la revendication 1, caractérisé en ce qu'est prévue une plaque de guidage (12) qui est disposée à plat entre le disque d'embrayage (10), d'une part, et les plaques (1, 2), d'autre part, et qui présente un orifice de passage (16) pour l'arbre (9) qui est en alignement avec les trous oblongs (3, 4) et à travers lequel la plaque de guidage ne peut pas se déplacer par rapport à l'arbre perpendiculairement à l'axe (18) de l'arbre, donc dans le sens de déplacement de la plaque de guidage.

3. Dispositif selon la revendication 2, caractérisé en ce qu'est prévue une deuxième plaque de guidage (13) parallèle au plan de la première plaque de guidage (12) et disposée à distance de cette dernière sur le même côté des plaques (1, 2), qui présente un palier (17) pour l'arbre (9) et qui est reliée à la première plaque de guidage (12).

4. Dispositif selon l'une des revendications précédentes, caractérisé en ce que le disque d'embrayage (10) présente sur son côté tourné vers les plaques (1, 2) une bague de freinage (11) coaxiale par rapport à l'arbre (9) et dont le rayon extérieur est au moins aussi grand que celui de la roue dentée (7).

5. Dispositif selon l'une des revendications précédentes, caractérisé en ce que, sur le côté du pendant d'embrayage (20) opposé aux plaques (1, 2), un élément d'arrêt (22) est fixé à l'arbre (9), et en ce que le ressort (21) est un ressort de compression qui est enfilé sur l'arbre de manière à être tendu entre l'élément d'arrêt et le pendant d'embrayage.

6. Dispositif selon la revendication 5, caractérisé en ce qu'une noyure (23) pour le ressort de compression (21) est ménagée dans le pendant d'embrayage (20).

7. Dispositif selon l'une des revendications précédentes, caractérisé en ce que sur l'extérieur du pendant d'embrayage (20) et coaxialement par rapport à l'axe (18) de l'arbre est prévu un étranglement (26) annulaire pour l'accès d'un outil (27, 28) d'un robot destiné à saisir le pendant d'embrayage.

8. Dispositif selon l'une des revendications précédentes, notamment selon la revendication 7, caractérisé en ce que, du côté du pendant d'embrayage (20), l'arbre (9) est réalisé en tant que bout d'arbre (24) dont la face frontale est réalisée sous la forme d'une surface d'appui (25) pour un outil de robot (27, 28) destiné à comprimer le ressort de compression (21).

9. Dispositif selon l'une des revendications précédentes, caractérisé en ce que des plaques (43, 44) forment chaque fois l'une des parties du bord d'un orifice (51, 52) destiné à recevoir une pièce à usiner, l'autre partie pouvant en revanche être déplacée pour modifier la dimension de l'orifice destiné à recevoir la pièce à usiner étant chaque fois formée par l'autre plaque.
